# EUROPEAN PATENT APPLICATION

(11) **EP 4 324 541 A1**
(43) Date of publication of application: **21.02.2024**
(21) Application number: 22936732.1
(22) Date of filing: 28.06.2022
(51) Int. Cl.: B01D 29/01, B03C 1/00, B03C 1/14

(54) **FOREIGN MATTER REMOVAL DEVICE**

(71) Applicant: Yjs Co., Ltd., Osaka-shi, Osaka 532-0021 (JP)
(72) Inventor: KAMEYAMA, Shuji, Osaka 5320021 (JP); YONEZAWA, Ikuhiro, Osaka 5320021 (JP)
(74) Representative: Grünecker Patent- und Rechtsanwälte PartG mbB
(86) International application number: PCT/JP2022/025783
(87) International publication number: WO 2024/004038

(57) **Abstract**

A foreign matter removing device is provided (i) which includes a main body (2) formed with a fluid inlet (5) and a fluid outlet (6); a deflecting member (3) that is provided inside of the main body (2), and that deflects the flow direction of the fluid flowing into the main body (2) such that the fluid flows along the inner wall of the main body (2); and a foreign matter removing part (4) for removing foreign matter in the fluid deflected by the deflecting member (3), or (ii) which includes a main body (2) formed with a fluid inlet (5) and a fluid outlet (6); a filter (20) provided inside of the main body (2); and a collecting portion (9) provided outside of the flow range of a fluid so as to collect foreign matter that falls off from the surface of the filter (20).

## Description

### TECHNICAL FIELD

This invention relates to a foreign matter removing device for removing foreign matter in a fluid.

### BACKGROUND ART

In many heating devices using hot water as a heating medium, the heating circuit through which water is circulated is composed of iron pipes, and foreign matter such as iron dust and rust could be mixed into the hot water from the inner walls of the iron pipes. Iron dust could cause malfunction of the pump for circulating the hot water, and rust could cause, in addition to malfunction of the pump, clogging of the heating circuit. It is therefore necessary to remove such foreign matter.

The below-identified Patent Documents 1 to 3 propose such devices for removing foreign matter.

The device shown in Patent Document 1 is configured such that water flowing in through a fluid inlet port is dispersed when passing through a filter cartridge 14 provided in a first chamber 11, and slows down. And, magnetic materials in the fluid are adsorbed to magnets 18 provided on the outer wall of a second chamber 15 provided under the first chamber 11 and nonmagnetic materials are deposited in the second chamber 15.

In the device shown in Patent document 2, a fluid flowing in through an inlet 15 flows through a shutoff valve 11 to a central chamber 27, and to magnets 34 provided at the center of the central chamber 27, magnetic materials in the fluid are adsorbed, while nonmagnetic materials are caught by a filter 25. The nonmagnetic materials deposit on the lower portion of the central chamber 27 while the fluid flow is stopped.

The device shown in Patent Document 3 is configured such that fluid flowing in through one of three ports 11, 12 and 13 passes through a cartridge 22 provided in a chamber 10A and in which are provide a filter element 20 and magnets 20, and flows out again through one of the three ports 11, 12 and 13, such as to adsorb the magnetic materials in the fluid with the magnets 21, and catch the nonmagnetic elements with the filter element 20.

### PRIOR ART DOCUMENTS

### PATENT DOCUMENTS

Patent document 1: US Patent Application Publication No. 2014/0367341
Patent document 2: International Publication No. 2018/207083
Patent document 3: European Patent application publication No. 3159313

### SUMMARY OF THE INVENTION

### PROBLEMS TO BE SOLVED BY THE INVENTION

In the configuration of Patent Document 1, since the magnetic materials are dispersed in the fluid by the filter cartridge 14, while the magnets 18, which are provided on the outer wall of the second chamber 15, are capable of adsorbing magnetic materials close to the inner wall of the second chamber 15, it is difficult to adsorb other magnetic materials with the magnets 18. Also, nonmagnetic materials deposited on the bottom of the second chamber 15 tend to be carried up by the fluid flow, which could make the removal of the nonmagnetic materials insufficient.

In the configuration of Patent document 2, since a fluid is stirred to some extent when the fluid flows to the shut-off valve 11 from the inlet 15, magnetic materials are dispersed in the fluid. Thus, only some of the magnetic materials approach the magnets 34, which are provided at the center of the central chamber 27, which lowers the adsorption efficiency of the magnetic materials. Also, the nonmagnetic materials which are deposited at the lower portion of the central chamber 27 could be carried up when the fluid flow resumes, thus making removal of the nonmagnetic materials also insufficient.

Further, in the configuration of Patent document 3, since the filter element 20 and the magnets 21, which are provided in the chamber 10A, are spaced apart, to some extent, from the flow paths directly connecting the respective ports 11, 12 and 13, the adsorption and removal efficiency of magnetic and nonmagnetic materials could decrease.

An object of the present invention is therefore to efficiently remove foreign matter in a fluid

### MEANS FOR SOLVING THE PROBLEMS

In order to achieve this object, the present invention provides a foreign matter removing device comprising: a main body formed with a fluid inlet and a fluid outlet; a deflecting member provided inside of the main body, the deflecting member being configured to deflect a flow direction of a fluid flowing into the main body such that the fluid flows along an inner wall of the main body; and a foreign matter removing part for removing foreign matter in the fluid deflected by the deflecting member.

With this arrangement, since foreign matter having a specific gravity larger than that of a fluid (typically water) flows mainly along the inner wall of the main body by inertia force, the foreign matter can be effectively removed by the foreign matter removing part.

In this arrangement, the deflecting member may be a V-shaped plate extending in a vertical direction and having a V shape in plan view, the V-shaped plate being configured to branch the fluid flowing into the main body through the fluid inlet, toward the inner wall of the main body, and deflect the flow direction of the branched fluid in the vertical direction such that the branched fluid flows along the inner wall of the main body, and the V-shaped plate may include a central protrusion facing the fluid inlet.

With this arrangement, it is possible to smoothly branch the fluid flowing in through the fluid inlet toward the inner wall of the main body, and thus it is possible to efficiently remove foreign matter with the foreign matter removing part.

In the arrangement in which the deflecting member is a V-shaped plate, the V-shaped plate preferably has, at a lower end of the V-shaped plate, cutouts formed by cutting out both ends of the V shape.

With this arrangement, the cutouts function as bypass passages for the fluid, thus making it possible to reduce, to some extent, the flow velocity in the vicinity of the lower end of the deflecting member. Thus, it is possible to further improve the foreign matter removing efficiency by the foreign matter removing part.

Alternatively, the deflecting member may comprise: a short-circuiting tube extending from the fluid inlet toward a wall surface opposed to the fluid inlet; and a deflecting plate vertically partitioning an interior of the main body, and configured to deflect, downwardly, the fluid that has passed through the short-circuiting tube, and the foreign matter removing device may be configured such that the fluid that has been deflected by the deflecting plate turns at a lower end portion of the main body, and flows upward through a side of the fluid inlet.

With this arrangement, the short-circuiting tube causes the fluid flowing in through the fluid inlet to flow straight toward the opposed wall surface, and also by the deflecting plate, the foreign matter contained in the fluid is collected in the vicinity of the wall surface. Thus, it is possible to more efficiently remove the foreign matter contained in the fluid.

In the arrangement in which the short-circuiting tube is used, a return passage is preferably formed on an outer peripheral edge of an exit side of the short-circuiting tube so as to guide, toward the exit side of the short-circuiting tube, a portion of the fluid flowing along the outer peripheral edge.

With this arrangement, the fluid that flows on the exit side of the short-circuiting tube, on which it is difficult to remove the foreign matter in the fluid with the foreign matter removing part, that is, the fluid that flows in an area somewhat away from the inner wall of the main body can be returned through the return passage in the main body. Thus, it is possible to further efficiently remove the foreign matter.

Also, in order to achieve the above-described object, the present invention provides a foreign matter removing device comprising: a main body formed with a fluid inlet and a fluid outlet; a filter provided inside of the main body; and a collecting portion provided outside of a flow range of a fluid so as to collect foreign matter that falls off from a surface of the filter.

In each of the configurations having the main body, the deflecting member and the foreign matter removing part, it is preferable that the foreign mater removing device further comprises a filter provided inside of the main body; and a collecting portion provided outside of a flow range of the fluid so as to collect foreign matter that falls off from a surface of the filter.

With this arrangement, since the influence of the fluid flow in the main body does not reach the collecting portion, it is possible to prevent the foreign matter that has fallen off from the surface of the filter, from being carried up by the fluid, and also, it is possible to efficiently remove the foreign matter in the fluid.

In the configuration having the filter, the filter is preferably arranged such that the entire amount of the fluid passes through the filter, or such that the fluid is branched into a flow path of the fluid passing through the filter and a flow path of the fluid flowing downward along the surface of the filter.

By, as described above, arranging the filter such that the entire amount of the fluid passes through the filter, it is possible to improve the foreign matter removing efficiency. Also, by arranging the filter such that the fluid is branched, foreign matter can be collected to the area close to the surface of the filter by the flow component passing through the filter, and can gradually drop into the collecting portion by the flow component flowing downward along the surface of the filter. Therefore, it is possible to collect the foreign matter while preventing clogging of the filter, without stopping the fluid flow.

In the configuration having the filter and the collecting portion, it is preferable that the main body and the collecting portion are connected together by a narrow tubular portion of which a horizontal sectional area is smaller than a horizontal sectional area of the main body, or that the main body and the collecting portion are partitioned by a partitioning member formed with through holes through which foreign matter that falls off from the filter passes downward.

By connecting together the main body and the collecting portion via the narrow tubular portion in this manner, since the influence of the fluid flow in the main body does not reach the collecting portion, it is possible to prevents the foreign matter collected by the collecting portion from being carried up by the fluid. The same advantage can be expected by partitioning the main body and the collecting portion with the partitioning member.

It is preferable that the foreign matter removing device including the filter and the collecting portion further comprises a cock valve attached to the collecting portion by a pin fastener, and capable of making the collecting portion open so that foreign matter is discharged.

With this arrangement, the cock valve can be easily attached to the collecting portion, which improves work efficiency.

In each of the above configurations, the foreign matter removing part preferably comprises a magnet provided on an outer wall of the main body so as to be located at a position along the flow of the fluid which has been deflected by the deflecting member.

With this arrangement, it is possible to easily adsorb the magnetic materials in the foreign matter with this magnet, and to collect the magnetic materials with the adsorbed state of the magnetic materials released by removing the magnet from the outer wall of the main body.

In the configuration in which the foreign matter removing part is a magnet, it is preferable that the magnet is magnetically adsorbed to a magnet holder of which at least a portion is composed of a magnetic material, and the magnet holder is fixed to the outer wall of the main body.

With this arrangement, it is not necessary to form pockets for retaining the magnet in the magnet holder and thus, the magnet can be brought into direct contact with the outer wall of the main body. This enables the magnetic force to effectively reach the interior of the main body. Also, by using a magnet holder of which at least a portion is composed of a magnetic material, the magnet holder serves as a yoke and prevents the outward spread of the magnetic lines. As a result, the magnetic flux density inside the main body increases, making it possible to more efficiently adsorb the magnetic materials in the foreign matter.

In the configuration in which the foreign matter removing part is a magnet, the magnet may be an electromagnet.

If the magnet is an electromagnet, by de-energizing the electromagnet, the magnetic materials adsorbed to the magnet can be easily separated and collected. The maintenance work is thus smooth.

In each of the above configurations, the foreign matter removing part is preferably a resisting member that applies flow resistance to the fluid flowing along the inner wall of the main body such that foreign matter in the fluid of which a flow velocity has been reduced by the flow resistance applied by the resisting member falls downward.

If the foreign matter removing part is such a resisting member, since it is possible to remove both magnetic materials and nonmagnetic materials in the foreign matter without using magnets, it is possible to reduce the material cost.

In the configuration in which the foreign matter removing part is the resisting member, the resisting member may include an intake port through which the fluid flowing along the inner wall of the main body is taken in; and an abutment wall against which the fluid taken in through the intake port abuts, and the foreign matter removing device may be configured such that foreign matter in the fluid to which flow resistance is applied by the abutment wall falls downward.

With this arrangement, it is possible to efficiently remove both magnetic and non-magnetic materials in the foreign matter, with a simple structure.

### EFFECTS OF THE INVENTION

According to the above structure, it is possible to efficiently remove foreign matter in a fluid.

### BRIEF DESCRIPTION OF THE DRAWINGS

Fig. 1 is a sectional view of a foreign matter removing device according to a first embodiment of the present invention.
Fig. 2 is a sectional view taken along line II-II of Fig. 1.
Fig. 3 is a perspective view showing magnets and a magnet holder of the foreign matter removing device shown in Fig. 1.
Fig. 4 is a perspective view showing a first modification of the foreign matter removing device shown in Fig. 1.
Fig. 5 is a perspective view showing a partitioning member of the foreign matter removing device shown in Fig. 4.
Fig 6 is a sectional view showing a second modification of the foreign matter removing device shown in Fig. 1.
Fig. 7 is a sectional view taken along line VII-VII of Fig. 6.
Fig. 8 is a sectional view taken along line VIII-VIII of Fig. 6.
Fig. 9 is a perspective view showing a partitioning member of the foreign matter removing device shown in Fig. 6.
Fig. 10 is a sectional view showing a third modification of the foreign matter removing device shown in Fig. 1.
Fig. 11 is a sectional view taken along line XI-XI of Fig. 10.
Fig. 12 is a sectional view showing a fourth modification of the foreign matter removing device shown in Fig. 1.
Fig. 13 is a sectional view showing a fifth modification of the foreign matter removing device shown in Fig. 1.
Fig. 14 is a sectional view of a foreign matter removing device according to a second embodiment of the present invention.

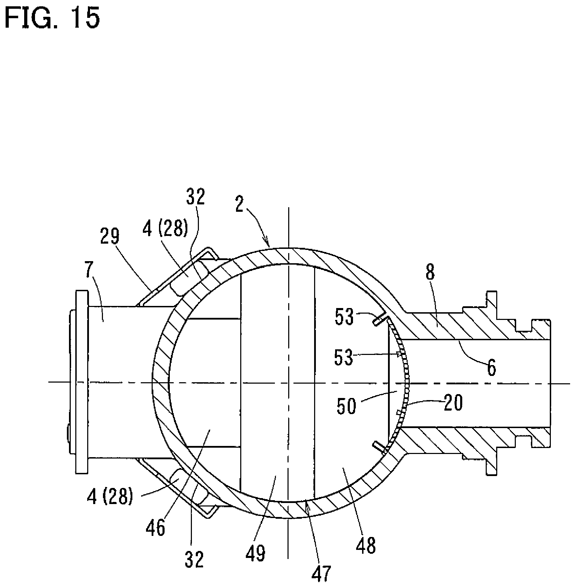

Fig. 15 is a sectional view taken along line XV-XV of Fig. 14.

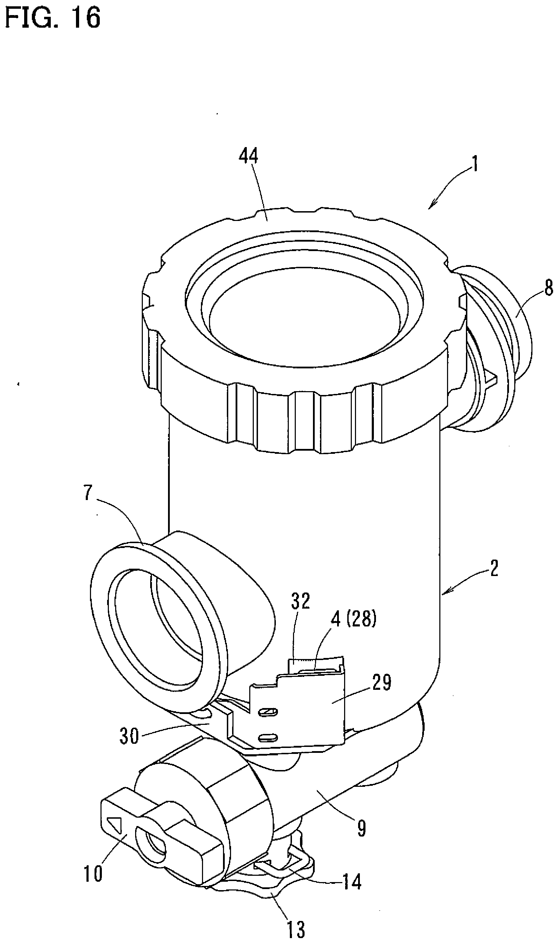

Fig. 16 is a perspective view of the foreign matter removing device shown in Fig. 14.
Fig. 17 is a perspective view showing a lid member of the foreign matter removing device shown in Fig. 14.
Fig. 18 is a perspective view showing a deflecting plate of the foreign matter removing device shown in Fig. 14.
Fig. 19 is a partial sectional view showing a first modification of the foreign matter removing device shown in Fig. 14.
Fig. 20 is a partial sectional view showing a second modification of the foreign matter removing device shown in Fig. 14.
Fig. 21 is a partial sectional view showing a third modification of the foreign matter removing device shown in Fig. 14.
Fig. 22 is a sectional view of a foreign matter removing device according to a third embodiment of the present invention.
Fig. 23 is a sectional view taken along line XXIII-XXIII of Fig. 22.
Fig. 24 is a sectional view taken along line XXIV-XXIV of Fig. 22.

### BEST MODE FOR CARRYING OUT THE INVENTION

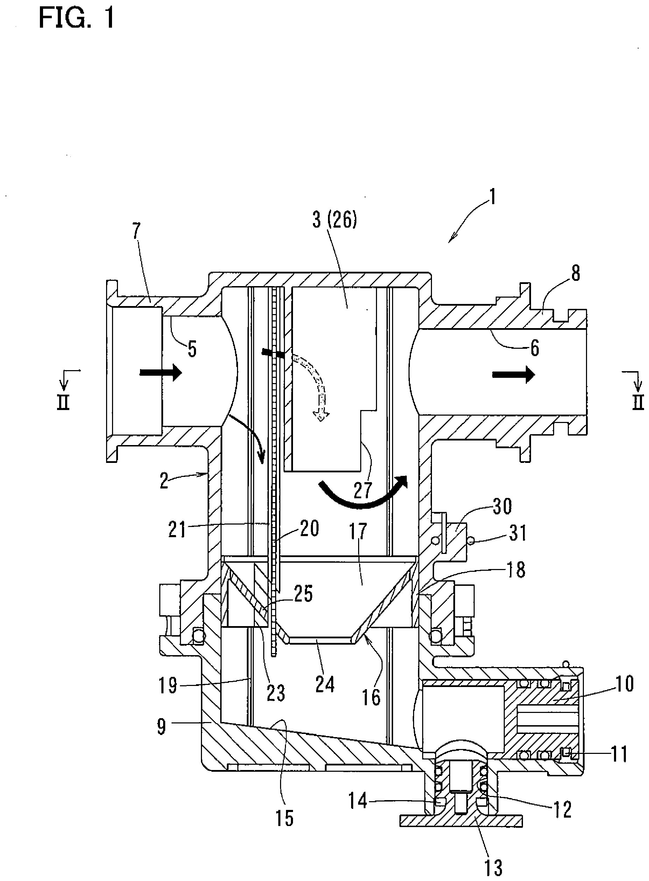

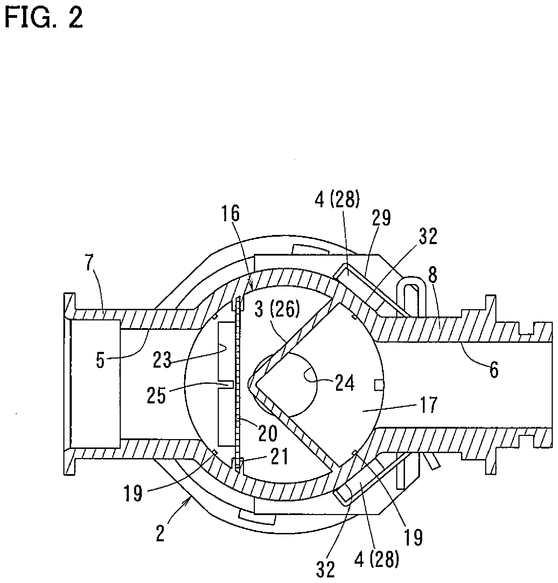

Referring to the drawings, the foreign matter removing device of the first embodiment according to the present invention is described. This foreign matter removing device is, in a heating device using, as a heating medium, hot water (heating water), which is a fluid, a device for removing foreign matter in the heating circuit through which hot water is circulated, and as shown in Figs. 1 and 2, includes, as main constituent parts, a main body 2, a deflecting member 3, and foreign matter removing parts 4. The arrows in Fig. 1 show the flow path of a fluid, and the difference in thicknesses of the arrows substantially corresponds to the difference in the flow rates.

The main body 2 is a cylindrical member having a fluid inlet 5 and a fluid outlet 6 that are formed in the upper portion of the main body 2, and having its lower portion open. The fluid inlet 5 and the fluid outlet 6 are located at positions higher than the center of the cylinder in its height direction, and also opposed to each other in the circumferential direction of the cylinder, and further the fluid inlet 5 and the fluid outlet 6 are formed at substantially the same heights of the cylinder. The inner diameter of the fluid inlet 5 is slightly larger than the inner diameter of the fluid outlet 6. The fluid inlet 5 is formed with an inlet piping connecting portion 7 and the fluid outlet 6 is formed with an outlet piping connecting portion 8, whereby other pipings forming the heating circuit can be connected thereto. The vertical positionings of the fluid inlet 5 and the fluid outlet 6 are not limited to the positionings shown, and could be changed. Also, the shape of the main body 2 is not limited to a cylinder, and could be changed to, for example, an oval tube or a square tube.

Provided at the lower end of the main body 2 is a tubular collecting portion 9 having an open top and a closed bottom, and having substantially the same diameter as the main body 2. The main body 2 and the collecting portion 9 are coupled together by a so-called snap-lock mechanism by which the main body 2 and the collecting portion 9 are locked together by circumferentially rotating them by a predetermined small angle after fitting (inserting) them together in the axial direction. To the collecting portion 9, a cock valve 10 formed with an insertion hole for a hexagonal wrench is attached by s pin fastener 11. To a discharge port 12 formed at a lower portion of the collecting portion 9, a plug 13 is fixed by a pin fastener 14. When the cock valve 10 is opened with the plug 13 removed from the discharge port 12, fluid in the main body 2 can be discharged together with the foreign matter collected by the collecting portion 9. The cock valve 10 and the plug 13 are provided on the side wall of the collecting portion 9 on the side of the fluid outlet 6. While in this embodiment, the main body 2 and the collecting portion 9 are made of a resin, a nonmagnetic material other than a resin may be used instead. On the bottom surface of the collecting portion 9, an inclined surface 15 that is inclined gradually downward toward the cock valve 10 is formed. However, it may be possible to omit the inclined surface 15 by optimizing the positioning of, for example, the cock valve 10.

Between the main body 2 and the collecting portion 9, a partitioning member 16 is provided that partitions the main body 2 from the collecting portion 9. The partitioning member 16 includes a cone portion 17 of which the diameter decreases downward, and a tubular portion 18 that extends axially downward from the top end of the cone portion 17. Ribs 19 are formed on the inner surface of the main body 2, and by the contact of the ribs 19 with the partitioning member 16, the partitioning member 16 is vertically positioned. Also, on the inner wall of the main body 2, ribs 21 for retaining a filter 20, described later, are formed, and with the ribs 21 fitted in slits 22 formed in the partitioning member 16, the partitioning member 16 is circumferentially positioned. A rectangular through hole 23 is formed in a portion of the cone portion 17 on the side of the fluid inlet 5, and a circular through hole 24 is formed at the central portion of the cone portion 17, such that the main body 2 and the collecting portion 9 communicate with each other through the holes 23 and 24. On the upstream side of the rectangular through hole 23, a protrusion piece 25 is formed that protrudes toward the downstream side.

The rectangular through hole 23, the circular through hole 24 and the discharge port 12 are arranged in one direction in this order. Because the rectangular through hole 23 is displaced in one direction from the circular through hole 24, which is formed in the central portion of the cone portion 17, when the cock valve 10 and the plug 13 are opened to discharge fluid through the rectangular and circular through holes 23 and 24, fluid flow is created in the collecting portion 9 toward the discharge port 12.

The deflecting member 3 is a V-shaped plate 26 extending vertically and having a V shape in plan view, wherein the V-shaped plate 26 branches the fluid flowing in through the fluid inlet 5, toward the inner wall of the main body 2, and deflects, vertically, the flow direction of the branched fluid such that the branched fluid flows along the inner wall of the main body 2. In order to prevent the fluid flowing in through the fluid inlet 5 from directly flowing out of the fluid outlet 6, without changing the flow direction, namely without flowing horizontally, the lower end of the V-shaped plate 26 extends to a position lower than the inner bottom surfaces of the fluid inlet 5 and the fluid outlet 6. Both end portions of the V-shaped plate 26 are in abutment with the inner wall of the main body 2. The V-shaped plate 26 partitions the cylindrical interior of the main body 2, in plan view, into the fluid inlet 5-side and the fluid outlet 6-side. At the lower end of the V-shaped plate 26, cutouts 27 are formed by cutting out both ends of the letter V

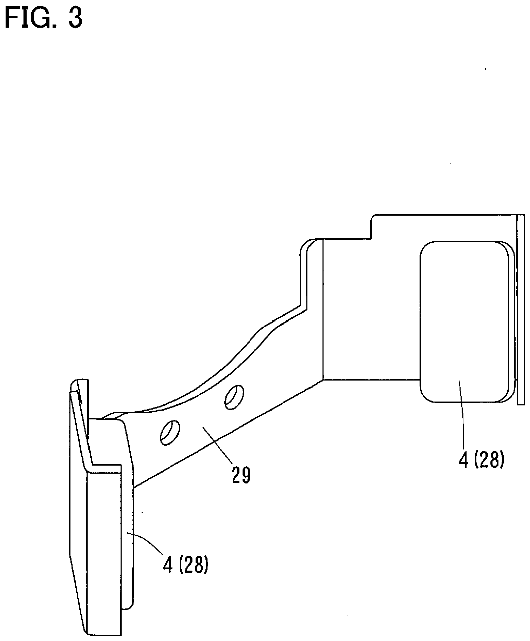

Magnets 28 as the foreign matter removing parts 4 are provided on the outer wall of the main body 2 so as to be located at positions along the flow of the fluid after being deflected by the deflecting member 3 (V-shaped plate 26). Specifically, the magnets 28 are composed of a pair of magnets provided under the lower end of the V-shaped plate 26 and downstream of a filter 20, described later. The mounting positions of the magnets 28 to the outer wall of the main body 2 are not particularly limited, but preferably between the side of the main body 2 (mid-position between the fluid inlet 5 and the fluid outlet 6) and the side of the fluid outlet 6. Depending on the position of the filter 20, the magnets 8 may be provided upstream of the filter 20. As shown in Fig. 3, the magnets 28 are flat plate-shaped neodymium magnets that are adsorbed to and retained by a magnet holder 29; sandwiched between the magnet holder 29 and a rib 30 which is formed on the outer wall of the main body 2, in a surface contact state; and fixed by a pin fastener 31. On the portions of the main body 2 that abut the respective magnets 28, flat portions 32 having flat surfaces are formed. Thus, the outer wall (flat portions 32) of the main body 2 is in surface contact with the magnets 28.

The filter 20 is disposed in the flow path of the fluid flowing through the main body 2. The filter 20 is a substantially rectangular flat plate-shaped wire net, and positioned at a predetermined position by having both ends thereof sandwiched by the respective ribs 21, which are formed on the inner wall of the main body 2, and having its lower end inserted into the rectangular through hole 23, which is formed in the cone portion 17, and fitted between the downstream side of the through hole 23 and the protrusion piece 25. The filter 20 is positioned in such a way as to branch the fluid into a fluid path passing through the filter 20 and a fluid path flowing downward along the surface of the filter 20.

Description is now made of the operation of the foreign matter removing device of the first embodiment when removing foreign matter (magnetic materials such as iron dust, and non-magnetic materials such as rust) contained in hot water as a fluid.

Fluid containing foreign matter flows into the main body 2 through the fluid inlet 5, and mainly flows through the filter 20. Since the V-shaped plate 26 is disposed rearwardly of the filter 20, the fluid flowing through the fluid inlet 5 branches to the right and left toward the inner wall of the main body 2, and is also deflected downward. At this time, of the foreign matter contained in the fluid, nonmagnetic materials such as rust are collected to the area close to the surface of the filter 20 by the flow component passing through the filter 20, and gradually drops by the downward flow component, along the surface of the filter 20. This foreign matter passes through the rectangular through hole 23, which is formed in the cone portion 17 of the partitioning member 16, and is collected by the collecting portion 9. With this arrangement, it is possible to collect foreign matter while preventing clogging of the filter 20 without stopping the flow of the fluid.

Of the foreign matter in the fluid that has been branched to the right and left toward the inner wall of the main body 2 by the V-shaped plate 26, magnetic materials such as iron dust are adsorbed by the magnetic force of the magnets 28, which are provided on the outer wall of the main body 2. At this time, if the flow velocity of the fluid is high, the magnetic materials are difficult to be adsorbed to the magnets 28, and also, the magnetic materials once adsorbed could be separated from the magnets 28 and washed away. However, since the flow velocity is relatively low in the area where the fluid flow turns from downward to upward, by placing the magnets 28 in this area, foreign matter composed of magnetic materials can be effectively adsorbed.

The sizes of the rectangular through hole 23 and the circular through hole 24, which are formed in the cone portion 17, are determined so as to minimize, as much as possible, while the fluid is flowing, the amount of the fluid flowing toward the collecting portion 9. For example, if the diameter of the main body 2 is, for example, 60 mm, the width of the rectangular through hole 23 is 1.8 to 12 mm, preferably 3 to 9 mm, and the diameter of the circular through hole 24 is 5 to 30 mm, and preferably 8 to 20 mm. By partitioning the main body 2 and the collecting portion 9 with the partitioning member 16 in this way, since the influence of the fluid flow in the main body 2 does not reach the collecting portion 9, it is possible to prevent the foreign matter collected by the collecting portion 9 (nonmagnetic materials) from being mixed into the fluid while the fluid is flowing Thus, foreign matter in the fluid can be effectively removed.

Also, in this embodiment, since the cutouts 27 are formed at the lower end of the V-shaped plate 26, the cutouts 27 function as bypass passages for the fluid, optimizing the flow in the vicinity of the magnets 28, for example, it is possible to lower the flow velocity in the vicinity of the lower end of the deflecting member 3 to some extent. This prevents, especially when the flow rate of the fluid is high, the magnetic materials adhered to the magnets 28 from being peeled off by the fluid, thereby further improving the adhesion efficiency of the magnetic materials. Also, by collecting the magnetic materials at locations in the vicinity of the heights where the magnets 28 are provided, by controlling the flow of the fluid, by forming the cutouts 27, further improvement in the adsorption efficiency of the magnetic materials can be expected. However, the cutouts 27 could be omitted due to, for example, the optimization of the flow direction of the fluid and the positions of the magnets 28, due to the design change of respective members.

By, after stopping the flow of the fluid, dismounting the magnets 28 along with the magnet holder 29 from the main body 2, the magnetic materials adsorbed to the magnets 28, such as iron dust, fall, and, passing through the circular through hole 24, which is formed in the cone portion 17 of the partitioning member 16, are collected by the collecting portion 9. Then, with the fluid flow stopped, by removing the plug 13, which is provided to the discharge port 12, and opening the cock valve 10, which is provided to the collecting portion 9, the foreign matter collected in the collecting portion 9 (magnetic and nonmagnetic materials) is discharged through the discharge port 12 along with the fluid in the main body 2. With this arrangement, when the cock valve 10 and the plug 13 are opened when the fluid is discharged through the rectangular and circular through holes 23 and 24, fluid flow is produced in the collecting portion 9 toward the discharge port 12. Moreover, since the inclined surface 15 is formed on the bottom surface of the collecting portion 9, the foreign matter can be smoothly discharged along with the fluid through the discharge port 12.

While, in this embodiment, the filter 20 is disposed such that the fluid is branched into the fluid path of the fluid passing through the filter 20 and the fluid path of the fluid flowing downward along the surface of the filter 20, the filter 20 may be disposed immediately before the fluid outlet 16 so that the fluid entirely passes through the filter 20.

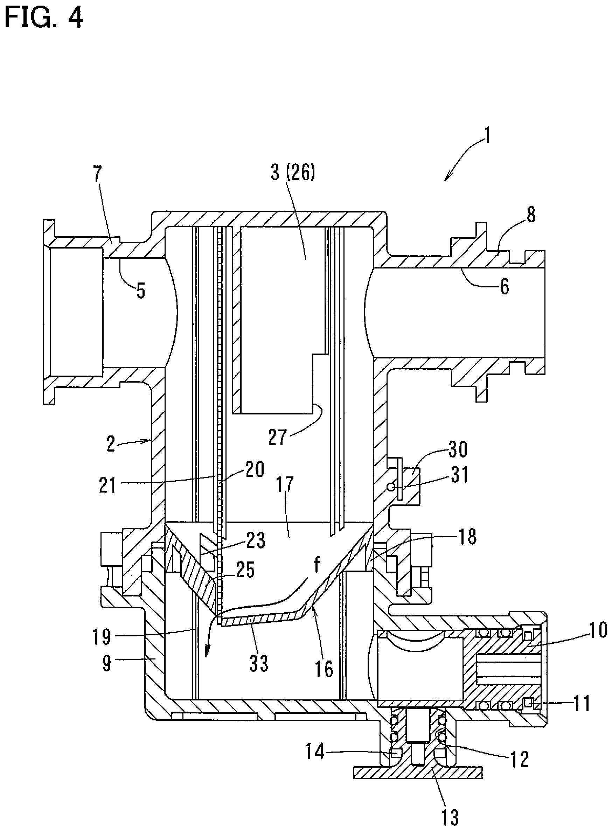

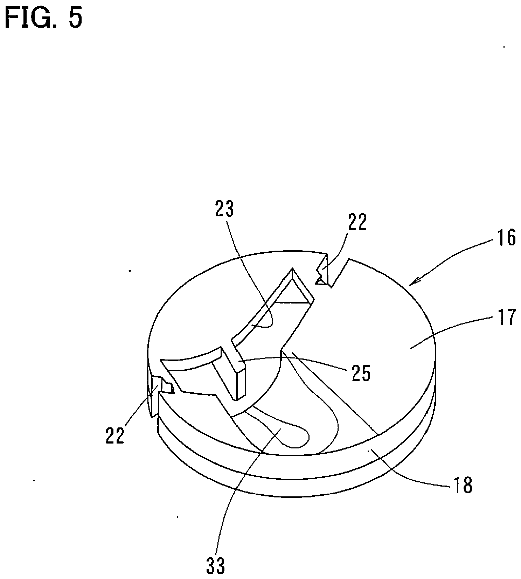

Figs. 4 and 5 show a first modification of the foreign matter removing device 1 according to the first embodiment. This first modification is common to the first embodiment in its basic structure, but differs therefrom in the structure of the partitioning member 16. In particular, in the partitioning member 16 according to the first embodiment, the rectangular through hole 23 is formed in the cone portion 17 at a position close to the fluid inlet 5, and the circular through hole 24 is formed in the central portion of the cone portion 17, whereas in the partitioning member 16 according to the first modification, only the rectangular through hole 23 is formed in the cone portion 17 at a position close to the fluid inlet 5, and on the central portion of the cone portion 17, an inclining portion 33 inclining downwardly toward the rectangular through hole 23 is formed.

According to this first modification, since the entire amount of the fluid passes through the filter 20, the filter 20 will not leave nonmagnetic materials uncaught. While magnetic materials pass through the filter 20 and are adhered to the magnets 28, when the magnets 28 are dismounted from the main body 2 together with the magnet holder 29 after stopping the flow of the fluid, the magnetic materials adhered to the magnets 28 fall and slide down toward the filter 20, while being guided by the inclined portion 33, which is formed on the cone portion 17 of the partitioning member 16. Then, the magnetic materials pass through the filter 20 in the opposite direction, pass through the rectangular through hole 23, and are caught by the collecting portion 9 (see the arrow f in Fig. 4). Then, when, with the fluid flow stopped, the plug 13, provided at the discharge port 12, is dismounted, and the cock valve 10, provided at the collecting portion 9, is opened, the foreign matter (magnetic and nonmagnetic materials) caught in the collecting portion 9 is discharged through the discharge port 12 together with the fluid in the main body 2.

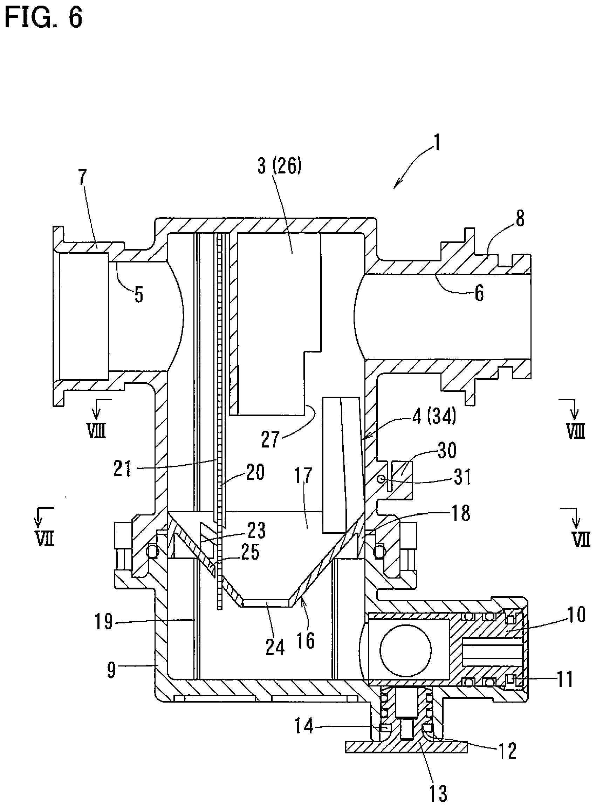

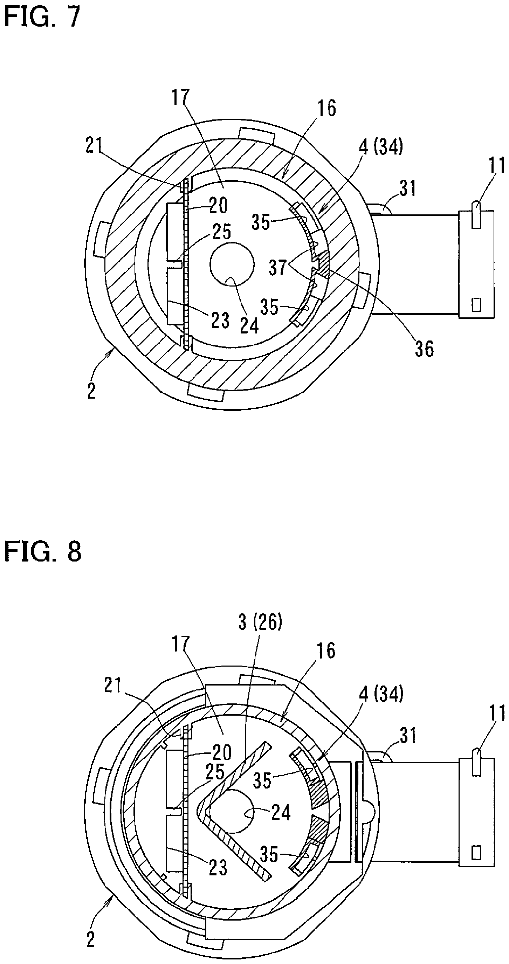

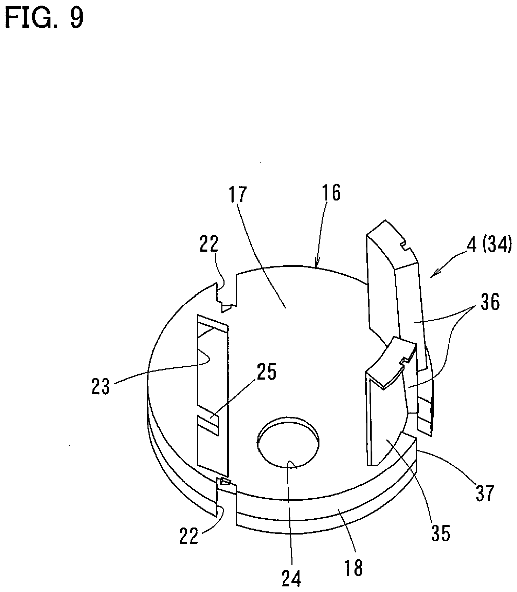

Referring to Figs 6 to 9, description is made of a second modification of the foreign matter removing device 1 according to the first embodiment. In the second modification, as the foreign matter removing parts 4, instead of the magnets 28, a resisting member 34 is used that applies flow resistance to the fluid flowing along the inner wall of the main body 2 such that the foreign matter in the fluid to which resistance is imparted by the resisting member 34 falls downward.

The resisting member 34 includes an intake port 35 through which the fluid that is flowing along the inner wall of the main body 2 is taken in, and an abutment wall 36 against which the fluid that has been taken in through the intake port 35 abuts. The cone portion 17 of the partitioning member 16 is formed with a drop port 37 through which the foreign matter in the fluid to which flow resistance is imparted drops downward. The drop port 37 is a through hole communicating with the collecting portion 9.

In the second modification, the magnets 28 are not necessary, so that the cost of members can be reduced, and foreign matter can be continuously collected in the collecting portion 9 without stopping the flow of the fluid, which reduces the maintenance work involving collection of foreign matter.

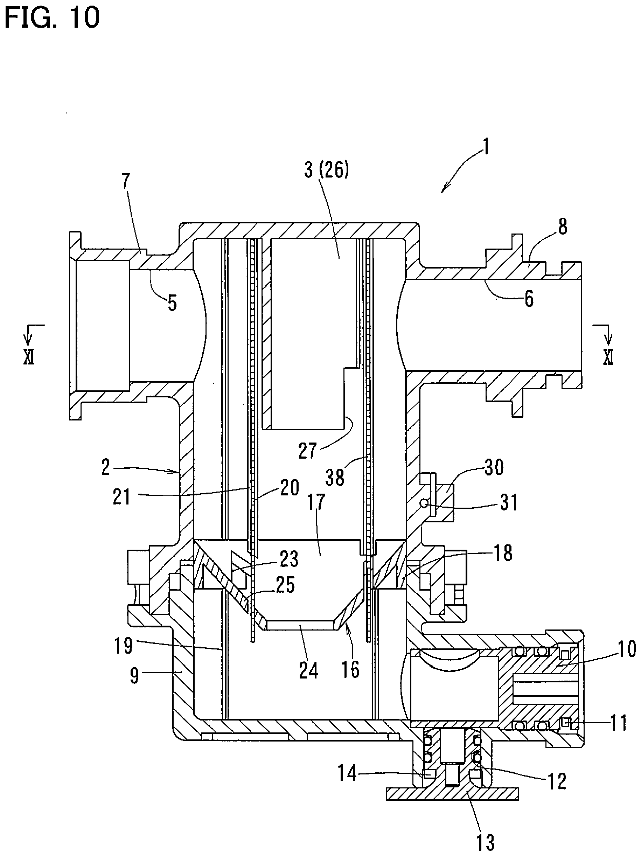

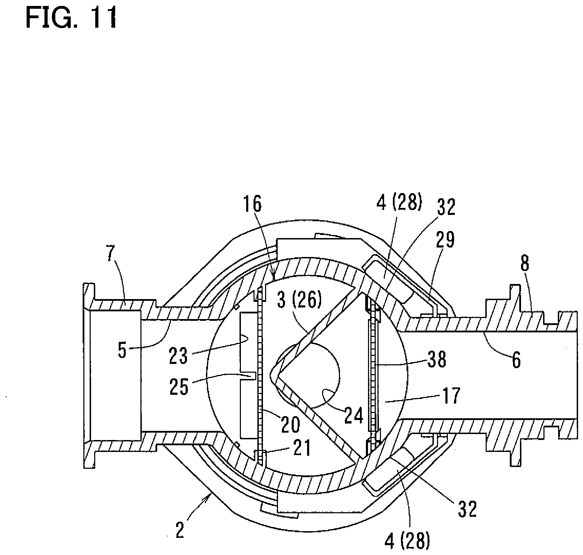

Figs. 10 and 11 show a third modification of the foreign matter removing device 1 according to the first embodiment. While the basic structure of the third modification is common to that of the first embodiment, the difference lies in that an auxiliary filter 38 extends from the upper end of the main body 2 to the cone portion 17 at a location closer to the fluid outlet 6 than is the circular through hole 24, which is formed in the cone portion 17. The auxiliary filter 38 is a flat plate-shaped wire net arranged such that the entire amount of the fluid flowing from the fluid inlet 5 to the fluid outlet 6 passes through the auxiliary filter 38.

By placing the auxiliary filter 38 in this manner, even if foreign matter once caught in the collecting portion 9 should fly up riding on the flow of the fluid toward the main body 2, the fly-up foreign matter is caught by the auxiliary filter 38, thereby preventing the foreign matter from flowing out of the fluid outlet 5. Also, since the auxiliary filter 38 is slightly spaced apart from the fluid outlet 6, a sufficient fluid flow area (filter area) of the fluid flowing through the auxiliary filter 38 is obtained. Thus, even if a large amount of foreign matter is contained in the fluid, it is possible to minimize the possibility of the clogging of the auxiliary filter 38.

If, while the fluid is flowing, the filter 20 (as well as the auxiliary filter 38) gets clogged, the fluid flow resistance increases, which influences the electric current value, the voltage value, etc. of the pump. Therefore, it is preferable to (i) detect fluctuations in the water pressure and the electric current value, the voltage value, etc. of the pump with various sensors, and (ii), if the clogging of the filter 20 is determined, stop the fluid flow and resume the fluid flow.

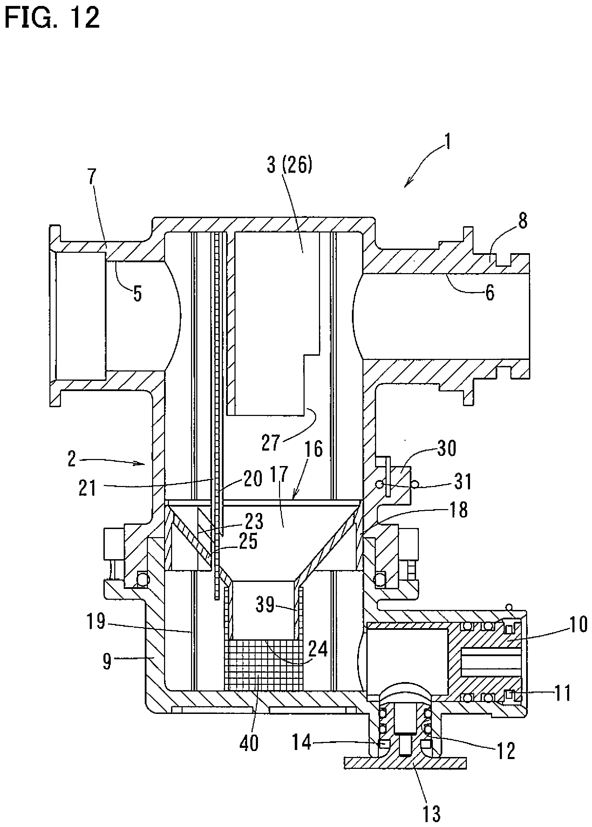

A fourth modification of the foreign matter removing device 1 according to the first embodiment is shown in Fig. 12. The fourth modification is also common in basic structure to the first embodiment, but differs therefrom in that an extended tubular portion 39 is continuously formed on the lower end of the cone portion 17, and to the extended tubular portion 39, a cylindrical filter 40 extending to the inner bottom surface of the collecting portion 9 is provided. The lower end of the extended tubular portion 39 corresponds to the through hole 24 of the first embodiment. The cylindrical filter 40 comprises a cylindrically shaped wire net, and is configured such that the entire amount of the fluid flowing from the fluid inlet 5 to the fluid outlet 6 passes through the filter 20 or the cylindrical filter 40.

By placing the cylindrical filter 40 in this way, even if foreign matter caught in the collecting portion 9 flies up by the fluid flowing into the collecting portion 9 through the through hole 23 of the cone portion 17, and, further through the through hole 24 of the extended tubular portion 39, returning to the main body 2, the cylindrical filter 40 prevents the foreign matter from flowing out into the main body 2.

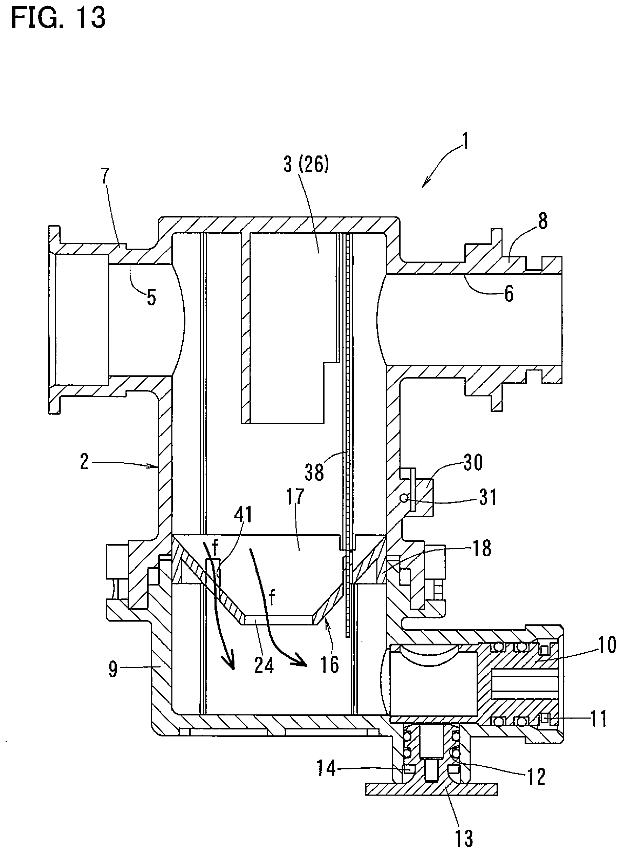

Fig. 13 shows a fifth modification of the foreign matter removing device 1 according to the first embodiment. The fifth modification differs from the second modification in that no filter 20 is used, and foreign matter is to be removed only with the auxiliary filter 38, and in that the a through hole 41 is formed at a location closer to the fluid inlet than is the circular through hole 24, which is located at the center of the cone portion 17. With this arrangement, when, with the fluid flow stopped, the cock valve 10, which is provided at the collecting portion 9, is opened by removing the plug 13, which is provided in the discharge port 12, the fluid in the main body 2 is discharged through the circular through hole 24, and at the same time, is discharged through the through hole 41, which is formed at a location close to the fluid inlet 5, (see the arrows f in Fig. 13). Since the fluid discharged through the through hole 41 flows toward the discharge port 12, it is possible to smoothly discharge, together with the fluid, the foreign matter (magnetic and nonmagnetic materials) collected in the collecting portion 9. The through hole 41 is not an essential element, and may be omitted.

Figs, 14 to 16 show a second embodiment according to the foreign matter removing device 1 according to the present invention. This foreign matter removing device includes, as with the first embodiment, a main body 2, a reflecting member 3, and foreign matter removing parts 4, as the main constituent elements.

The main body 2 is an open topped cylindrical member formed with a fluid inlet 5 and a fluid outlet 6. The fluid outlet 6 is located at a position higher than the fluid inlet 5 and circumferentially opposite of the cylinder. The inner diameter of the fluid inlet 5 is slightly larger than the inner diameter of the fluid outlet 6. The fluid inlet 5 is formed with an inlet piping connecting portion 7, and the fluid outlet 6 is formed with an outlet piping connecting portion 8 such that other pipes forming the heating circuit can be connected thereto. The vertical positional relation between the fluid inlet 5 and the fluid outlet 6 is not limited to what is shown. Their vertical positions may be reversed. The shape of the main body 2 is not limited to cylindrical, but may be oval, square tube-shaped, etc.

The main body 2 includes, at its lower end, a diameter-decreasing portion 42 of which the diameter decreases gradually downward. A collecting portion 9 is provided under the diameter-decreasing portion 42. The main body 2 and the collecting portion 9 are connected together by a narrow tubular portion 43. The collecting portion 9 is provided outside the flow range of the fluid that flows through the main body 2, and configured to temporarily collect the foreign matter in the fluid.

To the collecting portion 9, a cock valve 10 with a handle is mounted by a pin fastener 11. To a discharge port 12 formed at the lower portion of the collecting portion 9, a plug 13 is fixed by a pin fastener 14. When, with the plug 13 removed from the discharge port 12, the cock valve 10 is opened, it is possible to discharge the fluid in the main body 2 together with the foreign matter collected by the collecting portion 9. While in this embodiment, the main body 2 and the collecting portion 9 are integrally formed, they may be separate members. Also, in this embodiment, a resin is used as the material of the main body 2 and the collecting portion 9, but they may be made of another nonmagnetic material.

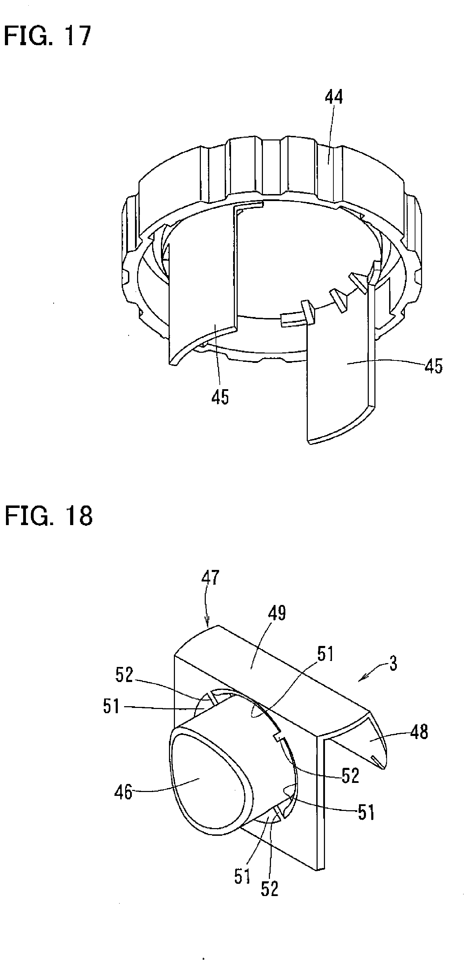

A lid member 44 is provided at the top opening of the main body 2. As shown in Fig. 17, on the underside of the lid member 44, an abutment member 45 which can abut against the upper portion of the deflecting member 3 continuously extends downward from the lid member 44. The abutment member 45 has a curved shape formed by partially cutting out a cylinder, and is arranged such as to extend along the inner wall of the main body 2. The abutment member 45 may be always in abutment with the upper surface of the deflecting member 3, but in this embodiment, they are designed to have a slight gap therebetween (about 0.5 mm), and configured such that only when the deflecting member 3 is displaced upward by this distance from a predetermined installation position, the deflecting member 3 and the abutment member 45 abut against each other. This arrangement prevents the deflecting member 3 from jumping up upward due to vibration during transportation of the assembled foreign matter removing device 1, and also prevents the deflecting member 3 from being displaced upward from the predetermined installation position due to hydraulic pressure while the fluid is flowing.

The deflecting member 3 includes a short-circuiting tube 46 continuously connected to the inlet port 5 and extending toward the wall surface opposed to the inlet port 5; and a deflecting plate 47 that roughly divides the interior of the main body 2 into an area through which the fluid mainly flows downward and an area through which the fluid mainly flows upward, and that deflects the fluid that has passed through the short-circuiting tube 46 downward. The fluid that has been deflected by the deflecting plate 47 turns at the lower portion of the main body 2 (close to the diameter-decreasing portion 42) and flows upward through the side of the fluid inlet 5.

The deflecting plate 47 includes an inclined portion 48 facing the above opposed wall surface and inclined downward toward its distal end, and a partitioning wall 49 connecting the inclined portion 48 and the short-circuiting tube 46 to each other. Between the above opposed wall surface and the distal end (inclined lower end) of the inclined portion 48, a discharge gap 50 is defined through which foreign matter falling from the below-described filter 20 falls toward the collecting portion 9 while the fluid flow is stopped. In this embodiment, because the diameter of the main body 2 is 60 mm, the size of the discharge gap 50 is set at about 5 mm, but the size of the discharge gap 50 is changeable within the range of about 1 to 20 mm. The size of discharge gap 50 may be changed corresponding to the diameter of the main body 2.

In this embodiment, as shown in Fig. 18, the deflecting member 3 (the short-circuiting tube 46 and the deflecting plate 47) is formed integrally. On the exit-side outer peripheral edge of the short-circuiting 46, a return passage 51 is formed that guides, toward the exit side of the short-circuiting tube 46, a portion of the fluid that flows upward along the above outer peripheral edge while passing through the space between the short-circuiting tube 46 and the partitioning wall 49 of the deflecting plate 47. On the return passage 51, reinforcing ribs 52 are formed at predetermined intervals, ensuring rigidity between the short-circuiting tube 46 and the partitioning wall 49. The integrally formed deflecting member 3 is positioned at a predetermined mounting position by abutting ribs 53 formed inside the main body 2.

Magnets 28 as the foreign matter removing parts 4 are disposed on the outer wall of the main body 2 so as to be located at positions along the flow of the fluid deflected by the deflecting member 3 (the short-circuiting tube 46 and the deflecting plate 47). More specifically, the magnets 28 are composed of a pair of magnets which are disposed at side portions lower than the height position of the short-circuiting tube 46. The mounting position of the magnets 28 on the outer wall of the main body 2 can be suitably determined, but is preferably between the side of the fluid inlet 5 and the side portion of the main body 2 (intermediate position between the fluid inlet 5 and the fluid outlet 6).

In this embodiment, flat plate-shaped neodymium magnets are used as the magnets 28. The magnets 28 are magnetically adsorbed to a magnet holder 29 composed of steel, which is a magnetic material, and the magnet holder 29 is sandwiched between the main body 2 and a rib 30 formed on the outer wall of the main body 2 in a surface contact state, and is fixed in position by a pin fastener 31. At the abutment portions of the main body 2 with the magnets 28, flat portions 32 having flat surfaces are formed. Thus, the outer wall (flat portions) of the main body 2 and the magnets 28 are in surface contact with each other.

The filter 20 is disposed right before the fluid outlet 6 of the main body 2. The filter 20 is positioned at a predetermined mounting position by abutting against the ribs 53, which are formed inside the main body 2. In this embodiment, a wire net is used as the filter 20. The filter 20 has a curved shape formed by partially cutting a cylinder, and covers the fluid outlet 6 right before the fluid outlet 6, along the inner wall of the main body 2, such that the entire amount of the fluid passes through the filter 20. The upper end of the filter 20 is located close to the lower surface of the lid member 44, and its lower end is located about several millimeters above the lower end of the inclined portion 48 of the deflecting plate 47.

Description is now made of the operation of the foreign matter removing device 1 according to the second embodiment when removing the foreign matter (magnetic materials such iron dust, and nonmagnetic materials such as rust) contained in a fluid (such as hot water).

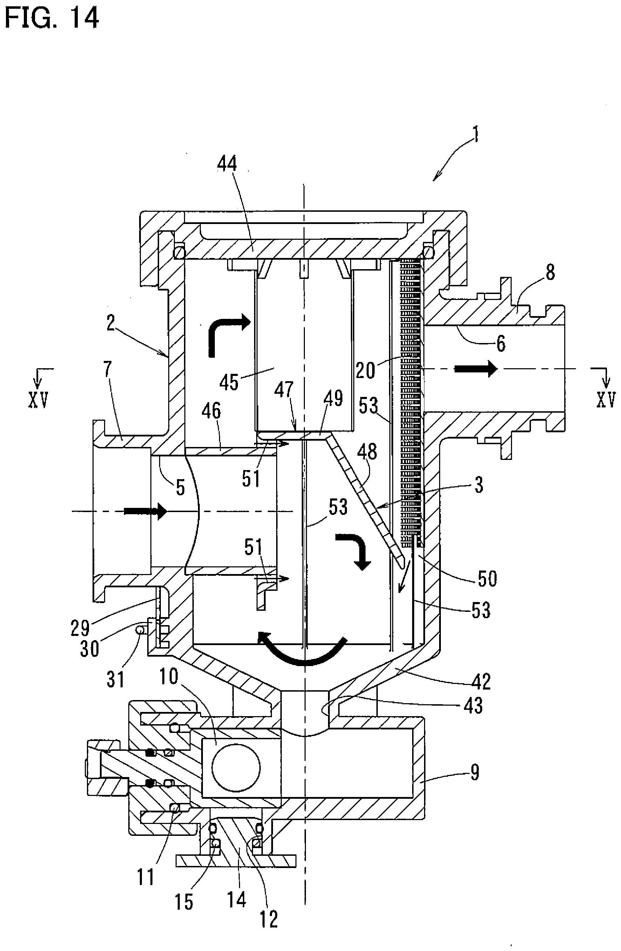

The fluid containing foreign matter flows into the main body 2 through the short-circuiting tube 46 of the deflecting member 3, which is provided at the fluid inlet 5. The short-circuiting tube 46, which is straight tube-shaped, causes this fluid to flow straight toward the wall surface facing the fluid inlet 5 (rightward in Fig. 14). Then, the fluid is deflected downward by the inclined portion 48, which is formed on the deflecting member 3, turns at the lower portion of the main body 2, and flows upward, passing through the side of the fluid inlet 5. Since the foreign matter is larger in specific gravity than the fluid, when the fluid is deflected in the main body 2, inertia force acts on the foreign matter. Since the sizes of the foreign objects (foreign matter) are extremely small (for example, the sizes of iron dust particles are on the order of several micrometers), they flow smoothly along the inner wall of the main body 2 without stagnating at a place of the flow. The larger the sizes of the foreign objects, the larger the inertia force, so that the foreign objects can more smoothly flow along the inner wall.

While, in this embodiment, in order to deflect the fluid downward in a smooth manner and reduce the flow resistance, the inclined surface 48, which inclines downward toward its distal end, is formed on the deflecting plate 47 of the deflecting member 3, the inclined portion 48 may be omitted.

Of the foreign matter flowing upward along the inner wall of the main body 2, magnetic materials such as iron dust are magnetically adsorbed to the magnets 28, which are provided on the outer wall of the main body 2. While the foreign matter composed of magnetic materials flow along the inner wall surface of the main body 2 together with the fluid, if the flow velocity of the fluid is high, the magnetic materials are less likely to be adsorbed to the magnets 28, or the magnetic materials that have once been adsorbed to the magnets 28 may peel off and be washed away. Thus, preferably, in order to keep such foreign matter stably adsorbed to the magnets 28, the upper limit of the flow rate of the fluid into the main body 2 is limited (to, for example, 10 L/min or less).

The magnets 28 are adsorbed to and held by the magnet holder 29, which is composed of a magnetic material. Thus, compared to an arrangement in which pockets are formed in the magnet holder 29 and the magnets 28 are received in and held by the pockets, the magnets 28 are more prominently exposed. Also, since the flat portions 32 are formed on the outer wall of the main body 2, and the magnets 28 are in surface contact with the flat portions 32, the magnetic force of the magnets 28 directly acts on the inner side of the main body 2, and thus it is possible to effectively adsorb foreign matter composed of magnetic materials. Also, since the magnet holder 29 is made of a magnetic material, the magnet holder 29 acts as a yoke, and prevents the outward spread of magnetic field lines. This increases the magnetic flux density inside the main body 2, and thus, it is possible to further efficiently adsorb foreign matter composed of magnetic materials. Further since the magnet holder 29 is stably retained by the flat surface of one rib 30, which is formed on the outer wall of the main body 2 and two flat surfaces of the two flat portions, a total of 3 flat surfaces, it is possible to prevent positional displacement of the magnets.

In this embodiment, the magnets are provided at positions lower than the height position of the short-circuiting tube 46, at the side portion thereof, but their positions are not particularly limited, and as long as they are located below the height position of the short-circuiting tube 46, the magnets 28 can be provided at arbitrary positions along the circumferential direction of the cylindrical main body 2. The magnets 28 can also be provided on the lower surface of the diameter-decreasing portion 42, which is formed on the lower end of the main body 2.

At a position under the height position of the short-circuiting tube 46, the foreign matter in the fluid tends to collect to the vicinity of the inner wall under the inertia force due to deflection, and also the flow velocity is relatively low. Therefore, it is possible to efficiently adsorb magnetic materials in the foreign matter with the magnets 28. At the height position of the short-circuiting tube 46, the flow path is narrow due to the existence of the short-circuiting tube 46 itself, and thus the flow velocity is high. Also, at a position higher than the height position of the short-circuiting tube 46, the foreign matter tends to separate from the inner wall of the main body 2. In either case, the adsorption efficiency could decrease.

Most part of the foreign matter composed of magnetic materials in the fluid flows along the inner wall of the main body 2 due to the inertia force acting on this foreign matter, but some of the foreign matter may flow at a position away from the inner wall of the main body 2 (position in the vicinity of the center of the main body 2). In such a case, since the magnetic force of the magnets 28 does not reach the foreign matter, it is difficult to adsorb the foreign matter with the magnets. Therefore, by forming the return passage 51 on the exit-side outer peripheral edge of the short-circuiting tube 46, due to the ejector effect generated by the flow of the fluid flowing into the main body 2 from the short-circuiting tube 46, part of the fluid flowing at a position away from the inner wall is pulled into the exit side of the short-circuiting tube 46, and refluxed in the main body 2. Thus, it is possible to more efficiently adsorb and remove the magnetic materials from among the foreign matter.

In this embodiment, by providing the reinforcing ribs 52 at predetermined intervals at the return passage 51 to provide rigidity between the short-circuiting tube and the partitioning wall 49, but the reinforcing ribs 52 may be provided on the upper end side of the return passage 51 so as to extend further toward the inclined portion 48 to further increase the rigidity improving effect by the reinforcing ribs 52. However, the return passage 51 may be omitted.

The fluid flowing upward through the side of the short-circuiting tube 46 is further deflected by the lid member 44, which is provided at the upper opening of the main body 2, in a horizontal direction (rightward direction in Fig. 14), and flows out of the fluid outlet 6 after passing through the filter 20. Of the foreign matter contained in the fluid, non-magnetic materials such as rust are temporarily caught by the filter 20. Then, when the fluid flow stops, the foreign matter composed of non-magnetic materials falls off from the filter 20, passes through the discharge gap 50 and the narrow tubular portion 43, and is caught by the collecting portion 9.

The diameter (inner diameter) of the narrow tubular portion 43 is determined such as to minimize the amount of the fluid flowing into the collecting portion 9 while the fluid is flowing, and, for example, if the diameter of the main body 2 is 60 mm, the diameter of the narrow tubular portion 43 may be set within the range of 5 to30 mm and preferably 8 to20 mm. By, as described above, connecting the main body 2 and the collecting portion 9 by the narrow tubular portion 43, the influence of the fluid flow of the main body 2 does not reach the collecting portion 9, as a result of which, there is no possibility of the foreign matter (non-magnetic materials) that has fallen off from the filter 20 and has been collected by the collecting portion 9 while the fluid flow is stopped, flying up when the fluid flow resumes. Thus, the foreign matter in the fluid can be efficiently removed.

While the fluid is flowing, by the ejector effect produced by the flow of the fluid that has flowed through the fluid inlet 5 and has been deflected downward by the inclined portion 48, the fluid in the discharge gap 50 is pulled in downward. This prevents short-circuiting of the fluid, i.e., prevents the fluid that has flowed in through the fluid inlet 5 from flowing upward through the discharge gap 50 and directly flowing out through the fluid outlet 6.

When, after stopping the fluid flow, the magnets 28 are dismounted from the main body 2 together with the magnet holder 29, the magnetic materials such as iron dust that have been adsorbed to the magnets 28 drop and, passing through the narrow tubular portion 43, are temporarily collected by the collecting portion 9. When, with the fluid flow stopped, the plug 13, which is provided at the discharge port 12, is removed, and the cock valve 10, which is provided at collecting portion 9, is opened, the foreign matter (magnetic and nonmagnetic materials) collected by the collecting portion 9 is discharged through the discharge port 12 together with the fluid in the main body 2. As with the first embodiment, by forming, on the bottom surface of the collecting portion 9, an inclined surface 15 that is inclined downward toward the cock valve 10 (see Fig. 1), the foreign matter can be smoothly discharged from the discharge port 12 together with the fluid.

Foreign matter such as iron dust and rust adhered to the inner walls of the iron pipes forming the heating circuit peels off from the inner walls of the iron pipes when the fluid in the pipes is drained for replacement of the heating device, and is scattered in the iron pipes. When the fluid flow is resumed in this state, the scattered foreign matter moves together with the fluid, and among the foreign matter, nonmagnetic materials are caught by the filter 20, which causes a gradual clogging of the filter 20, which in turn results in a significant reduction in the flow rate of the fluid.

In this case, it is possible to conduct an intermittent fluid-flow-on-off control in which the fluid flow is stopped temporarily, after a predetermined time period (for example, 5 minutes) has passed, and after a further predetermined time period (for example, 5 minutes) from the stop has passed, the fluid flow is resumed. In this intermittent fluid-flow-on-off control, when foreign matter is caught on the filter 20 to some extent after the predetermined time period has passed, the fluid flow is stopped, and the foreign matter caught by filter 20 is dropped into the collecting portion 9. By dropping the foreign matter into the collecting portion 9, clogging of the filter 20 disappears, and the flow rate of the fluid passing through the filter 20 is recovered when the fluid flow is resumed.

This intermittent fluid-flow-on-off control can be made any time, for example when, as described above, the fluid in the pipes is drained. As for the timing of this control, various control rules may be determined, including: (i) conducting this control every time the heating device is started; and (ii) for a new heating device, conducting this control within a predetermined time period from the initial start (within 10 hours, for example), or within a predetermined number of restarts (10 restarts, for example). Stopping and restarting of the fluid flow may be repeated a plurality of times until foreign matter in the iron pipes is removed to some extent. The above predetermined period from the stopping to the restart of the fluid flow can be changed suitably taking into consideration, for example, the amount of foreign matter contained in the fluid, and how easily the foreign matter falls off from the filter 20.

Clogging of the filter 20 while the fluid is flowing causes increased fluid flow resistance, which affects the electric current value and the voltage value of the pump. Thus, fluctuations in, for example, the water pressure and the electric current value and the voltage value of the pump may be sensed with various sensors and if determination is made that the filter 20 is clogged, stopping and restart of the fluid flow may be carried out.

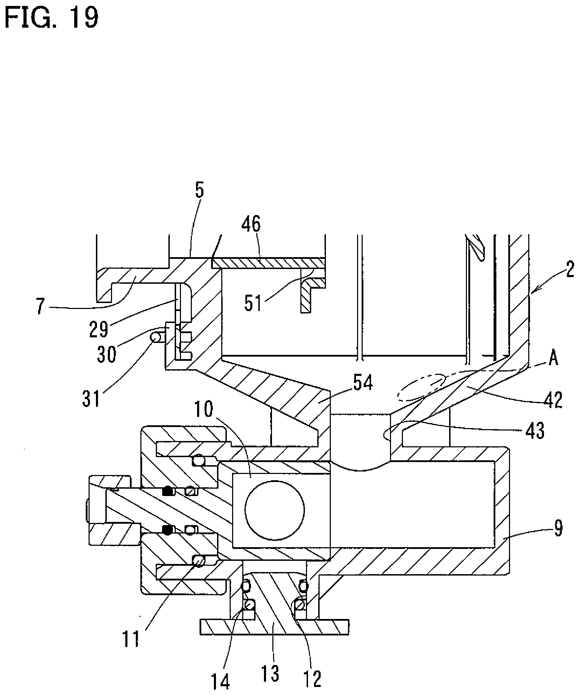

In the second embodiment, a narrow tubular portion 43 is formed on the axial center of the main body 2, and the inner bottom surface of the diameter-decreasing portion 42 is circumferentially uniformly inclined toward the narrow tubular portion 43, forming a bowl, but as shown in Fig. 19, which shows a first modification of the second embodiment, a different-diameter portion 54 may be formed by making the inner bottom surface of the dimeter-decreasing portion 42 on the side opposite from the side of the filter 20 higher than the inner bottom surface of the dimeter-decreasing portion 42 on the side of the filter 20. With this arrangement, foreign matter that has fallen off from the filter 20 while the fluid flow is stopped, and has deposited on the inner bottom surface of the diameter-decreasing portion 42 (portion A shown by the broken line in Fig. 19), without reaching the collecting portion 9, is guided downward by the different-diameter portion 54 when the fluid flow resumes, and, passing through the narrow tubular portion 43, is smoothly collected by the collecting portion 9. Thus, it is possible to prevent the deposited foreign matter from being washed away by the fluid when the fluid flow resumes.

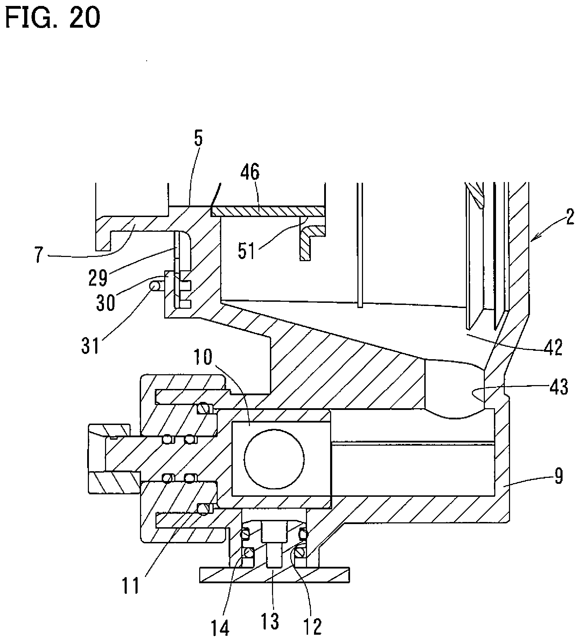

As shown in Fig. 20, which shows a second modification of the second embodiment, the narrow tubular portion 43 may be displaced toward the wall surface from the center of the main body 2. More specifically, the narrow tubular portion 43 may be displaced from the center of the main body 2 toward the filter 20. With this arrangement, it is possible to smoothly guide the foreign matter composed of non-magnetic materials that falls through the discharge gap 50 while the fluid flow is stopped, through the narrow tubular portion 43 to the collecting portion 9.

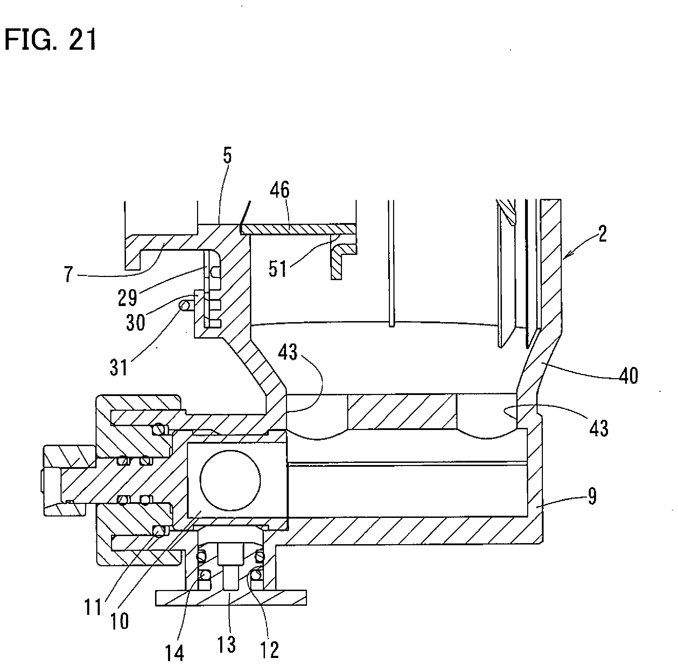

Further, as shown in Fig. 21, which shows a third modification of the second embodiment, plural (two in the shown example) narrow tubular portions 43 may be disposed such that, in the shown example, one of the two narrow tubular portions 43 is displaced from the center of the main body 2 toward the filter 20, and the other narrow tubular portion 43 is displaced from the center of the main body 2 toward the magnets 28. With this arrangement, both of foreign matter composed of non-magnetic materials that falls off from the filter 20 when stopping the fluid flow, and foreign matter composed of magnetic materials that falls off from the inner wall of the main body 2 when removing the magnets 28 can be smoothly guided to the collecting portion 9 through the narrow tubular portions 43. The number of the plural narrow tubular portions 43 is not limited to two, and may be increased, if necessary. For example, two narrow tubular portions 43 may be disposed on the side of the magnets 28 with (different) two narrow tubular portions 43 disposed on the side of the filter 20.

The arrangement of the collecting portion 9, the cock valve 10, and the discharge port 12 is not limited to the arrangement shown in Fig. 14. For example, the collecting portion 9, the cock valve 10, and the discharge port 12 may be arranged vertically for easier discharge of foreign matter. Further, the valve opening direction of the cock valve 10 may be rotated 90 degrees from the structure shown in Fig. 14, while changing the discharge direction of the discharge port 12 to a lateral direction, so that when the collecting portion 9 is clogged with foreign matter, the clogged foreign matter can be taken out from the discharge port 12 using a jig.

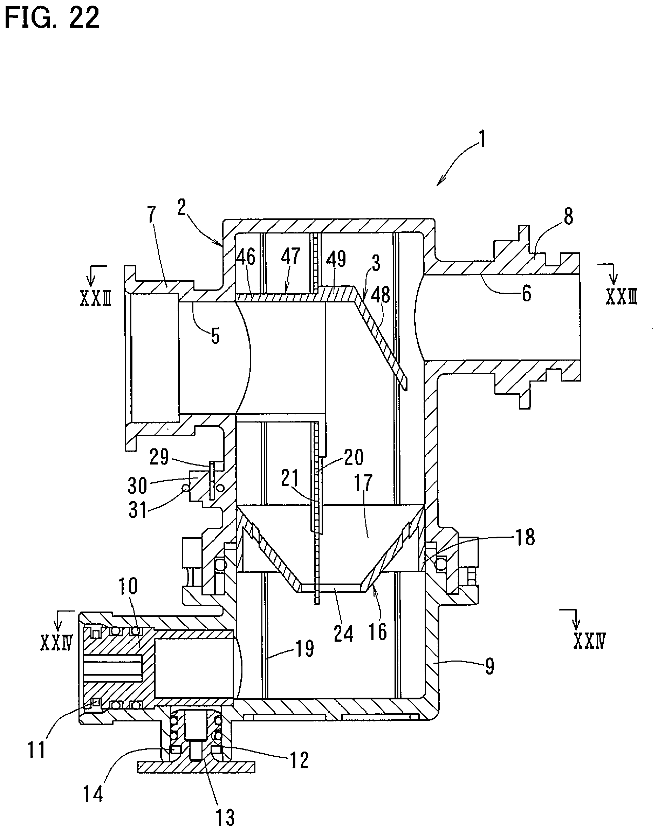

The third embodiment of the foreign matter removing device 1 according to the present invention is shown in Figs. 22 to 24. This foreign matter removing device 1 is based on the foreign matter removing device 1 according to the second embodiment, but uses the structure of the filter 20 according to of the first embodiment. The foreign matter removing device 1 according to the third embodiment, as with the above respective embodiments, includes, as main constituent elements, a main body 2, a deflecting member 3 (a short-circuiting tube 46 and a deflecting plate 47), and foreign matter removing parts 4 (magnets 28). Since the structures of the main body 2, the deflecting member 3, and the foreign matter removing parts 4 are common to those of the first embodiment and the second embodiment, their description is not repeated here.

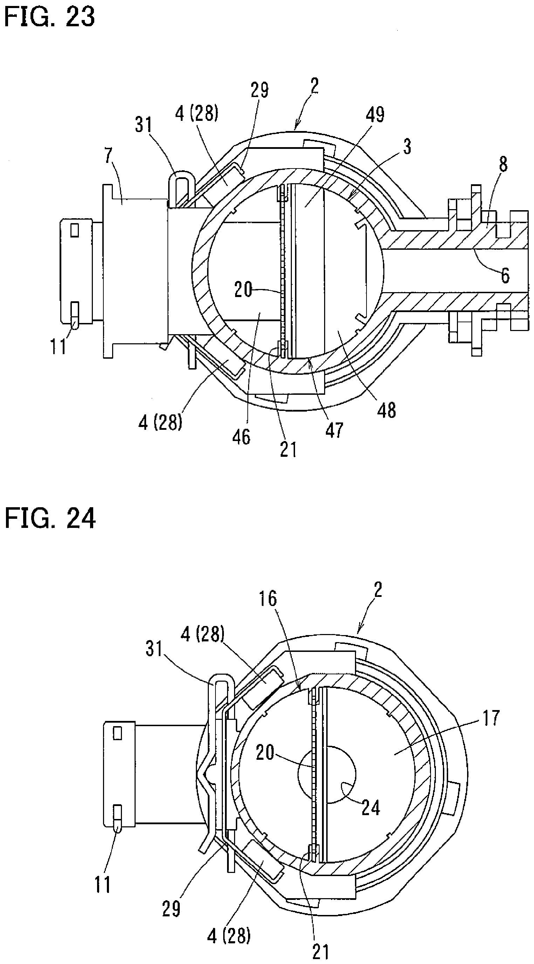

The foreign matter removing device 1 according to the third embodiment includes a partitioning member 16 similar to that of the first embodiment, which partitions the main body 2 from the collecting portion 9, but differs therefrom in that a circular through hole 24 formed in the cone portion 17 has both of the functions of the rectangular through hole 23 and the circular through hole 24 of the first embodiment. While, as shown in, e.g., Fig. 24, only one circular hole 24 is formed in the cone portion 17, an additional through hole may be formed in the cone portion 17 as long as the influence of the fluid flow in the main body 2 does not reach the collecting portion 9. While the foreign matter removing device 1 according to the third embodiment is common to the first embodiment in that the filter 20 is arranged such as to branch the fluid flow into a fluid path passing through the filter 20 and a fluid path flowing downward along its surface, but differs therefrom in that the filter 20 extends across the circular through hole 24 while being slightly displaced toward the fluid inlet 5 from the center of the circular through hole 24.

The filter 20 is positioned in a predetermined mounting position by having both ends thereof sandwiched between ribs 21 formed on the inner wall of the main body 2, with its lower end inserted in a pair of slits (not shown) formed in the inner edge of the circular through hole 24, which is formed in the cone portion 17 of the partitioning member 16.

Description is now made of the operation of the foreign matter removing device 1 according to the third embodiment when removing foreign matter (magnetic materials such as iron dust and non-magnetic materials such as rust) contained in hot water as a fluid.

The fluid containing foreign matter flows into the main body 2 through the short-circuiting tube 46 of the deflecting member 3, which is provided at the fluid inlet 5., The short-circuiting tube 46, which is a straight tube-shaped, causes this fluid to flow straight toward the wall surface facing the fluid inlet 5 (rightward in Fig. 22). Then, the fluid is deflected downward by the inclined portion 48, which is formed on the deflecting member 3, turns at the lower portion of the main body 2, and flows toward the fluid inlet 5. At this time, of the foreign matter contained in the fluid, non-magnetic materials such as rust are collected by the flow component passing through the filter 20 to an area close to the surface of the filter 20, and falls by the flow component flowing downward along the surface of the filter 20. Then, the fluid passes through the circular through hole 24 (right side of the through hole 24 in Fig. 24), which is formed in the cone portion 17 of the partitioning member 16, and is collected by the collecting portion 9. On the other hand, of the foreign matter in the fluid that has turned at the lower portion of the main body 2, passed through the filter 20, and flowed toward the fluid inlet 5, magnetic materials such as iron dust are magnetically adsorbed to the magnets 28 on the outer wall of the main body 2.

The size of the circular through hole 24, which is formed in the cone portion 17, is determined so as to minimize, as much as possible, the amount of the fluid flowing toward the collecting portion 9 while the fluid is flowing, and for example, if the diameter of the main body 2 is 60 mm, the diameter of the circular through hole 24 is determined at 5 to 30 mm, and preferably 8 to 20 mm. By partitioning the main body 2 and the collecting portion 9 with the portioning member 16 in this way, since the influence of the fluid flow in the main body 2 does not reach the collecting portion 9, there is no possibility of the foreign matter (non-magnetic materials) collected by the collecting portion 9 flying up into the fluid while the fluid is flowing. Thus, it is possible to efficiently remove the foreign matter in the fluid.

When, after stopping the flow of the fluid, the magnets 28 are dismounted from the main body 2 together with the magnet holder 29, magnetic materials such as iron dust that has been adsorbed to the magnets 28 fall off, passes through the circular through hole 24 (left side of the through hole 24 in Fig. 24), which is formed in the cone portion 17 of the partitioning member 16, and are collected by the collecting portion 9. When, with the flow of the fluid stopped, the plug 13, which is provided at the discharge port 12, is removed, and the cock valve 10, which is provided at the collecting portion 9, is opened, the foreign matter (magnetic and nonmagnetic materials) that has been caught in the collecting member 9 is discharged through the discharge port 12 together with the fluid in the main body 2. As in the first embodiment, by forming, on the bottom surface of the collecting portion 9, an inclined surface 15 that is inclined downward toward the cock valve 10 (see Fig. 1), the foreign matter can be smoothly discharged through the discharge port 12 together with the fluid.

While in the third embodiment, the partitioning member 16 is provided between the main body 2 and the collecting portion 9, the main body 2 and the collecting portion 9 may be connected together by a narrow tubular portion 43, as in the second embodiment.

While in each of the above-described embodiments, neodymium magnets are used as the magnets 28, electromagnets may be used instead. If electromagnets are used, it is possible to easily separate the magnetic materials adsorbed to the electromagnets and collect them in the collecting portion 9, by de-energizing the electromagnets. Maintenance work is thus smooth.

While in each of the above-described embodiments, the magnets 28 are used to catch magnetic materials, and the filter 20 is used to catch nonmagnetic materials, if catching magnetic materials only is sufficient, the filter 20 can be omitted. Also, if catching nonmagnetic materials only is sufficient, and if the sizes of the magnetic materials are such that they can be caught with the filter 20, the magnets 28 can be omitted.

The above-described embodiments are mere examples in every respect, and the present invention is not limited thereto. Hence, the scope of the present invention is indicated not by the above description but by the claims, and should be understood as including all modifications and the meaning equivalent to the scope of the claims.

### DESCRIPTION OF REFERENCE NUMERALS

1. Foreign matter removing device
2. Main body
3. Deflecting member
4. Foreign matter removing part
5. Fluid inlet
6. Fluid outlet
7. Inlet piping connecting portion
8. Outlet piping connecting portion
9. Collecting portion
10. Cock valve
11, 14, 31. Pin fastener
12. Discharge port
13. Plug
15. Inclined surface
16. Partitioning member
17. Cone portion
18. Tubular portion
19, 21, 30, 53. Rib
20. Filter
22. Slit
23. (Rectangular) through hole
24 (Circular) through hole
25. Protrusion piece
26. V-shaped plate
27. Cutout
28. Magnet
29. Magnet holder
32. Flat portion
33. Inclined portion
34. Resisting member
35. Intake port
36. Abutment wall
37. Drop port
38. Auxiliary filter
39. Extended tubular portion
40. Cylindrical filter
41. Through hole
42. Diameter-decreasing portion
43. Narrow tubular portion
44. Lid member
45. Abutment member
46. Short-circuiting tube
47. Deflecting plate
48. Inclined portion
49. Partitioning wall
50. Discharge gap
51. Return passage
52. Reinforcing rib
54. Different-diameter portion

## Claims

1. A foreign matter removing device comprising:
a main body (2) formed with a fluid inlet (5) and a fluid outlet (6);
a deflecting member (3) provided inside of the main body (2), the deflecting member (3) being configured to deflect a flow direction of a fluid flowing into the main body (2) such that the fluid flows along an inner wall of the main body (2); and
a foreign matter removing part (4) for removing foreign matter in the fluid deflected by the deflecting member (3).

2. The foreign matter removing device according to claim 1, wherein the deflecting member (3) is a V-shaped plate (26) extending in a vertical direction and having a V shape in plan view, the V-shaped plate (26) being configured to branch the fluid flowing into the main body (2) through the fluid inlet (5), toward the inner wall of the main body (2), and deflect the flow direction of the branched fluid in the vertical direction such that the branched fluid flows along the inner wall of the main body (2), and
wherein the V-shaped plate (26) includes a central protrusion facing the fluid inlet (5).

3. The foreign matter removing device according to claim 2, wherein the V-shaped plate (26) has, at a lower end of the V-shaped plate (26), cutouts (27) formed by cutting out both ends of the V shape.

4. The foreign matter removing device according to claim 1, wherein the deflecting member (3) comprises:
a short-circuiting tube (46) extending from the fluid inlet (5) toward a wall surface opposed to the fluid inlet (5); and
a deflecting plate (47) vertically partitioning an interior of the main body (2), and configured to deflect, downwardly, the fluid that has passed through the short-circuiting tube (46), and
wherein the foreign matter removing device is configured such that the fluid that has been deflected by the deflecting plate (47) turns at a lower end portion of the main body (2), and flows upward through a side of the fluid inlet (5).

5. The foreign matter removing device according to claim 4, wherein a return passage (51) is formed on an outer peripheral edge of an exit side of the short-circuiting tube (46) so as to guide, toward the exit side of the short-circuiting tube (46), a portion of the fluid flowing along the outer peripheral edge.

6. A foreign matter removing device comprising:
a main body (2) formed with a fluid inlet (5) and a fluid outlet (6);
a filter (20) provided inside of the main body (2); and
a collecting portion (9) provided outside of a flow range of a fluid so as to collect foreign matter that falls off from a surface of the filter (20).

7. The foreign mater removing device according to any one of claims 1 to 5, further comprising a filter (20) provided inside of the main body (2); and a collecting portion (9) provided outside of a flow range of the fluid so as to collect foreign matter that falls off from a surface of the filter (20).

8. The foreign matter removing device according to claim 6 or 7, wherein the filter (20) is arranged such that the entire amount of the fluid passes through the filter (20), or such that the fluid is branched into a flow path of the fluid passing through the filter (20) and a flow path of the fluid flowing downward along the surface of the filter (20).

9. The foreign matter removing device according to any one of claims 6 to 8, wherein the main body (2) and the collecting portion (9) are connected together by a narrow tubular portion (43) of which a horizontal sectional area is smaller than a horizontal sectional area of the main body (2), or the main body (2) and the collecting portion (9) are partitioned by a partitioning member (16) formed with through holes (23 and 24) through which foreign matter that falls off from the filter (20) passes downward.

10. The foreign matter removing device according to any one of claims 6 to 9, further comprising a cock valve (10) attached to the collecting portion (9) by a pin fastener (11), and capable of making the collecting portion (9) open so that foreign matter is discharged.

11. The foreign matter removing device according to any one of claims 1 to 10, wherein the foreign matter removing part (4) comprises a magnet (28) provided on an outer wall of the main body (2) so as to be located at a position along the flow of the fluid which has been deflected by the deflecting member (3).

12. The foreign matter removing device according to claim 11, wherein the magnet (28) is magnetically adsorbed to a magnet holder (29) of which at least a portion is composed of a magnetic material, and the magnet holder (29) is fixed to the outer wall of the main body (2).

13. The foreign matter removing device according to claim 11, wherein the magnet (28) is an electromagnet.

14. The foreign matter removing device according to any one of claims 1 to 10, wherein the foreign matter removing part (4) is a resisting member (34) that applies flow resistance to the fluid flowing along the inner wall of the main body (2) such that foreign matter in the fluid of which a flow velocity has been reduced by the flow resistance applied by the resisting member (34) falls downward.

15. The foreign matter removing device according to claim 14, wherein the resisting member (34) includes an intake port (35) through which the fluid flowing along the inner wall of the main body (2) is taken in; and an abutment wall (36) against which the fluid taken in through the intake port (35) abuts, and
wherein the foreign matter removing device is configured such that foreign matter in the fluid to which flow resistance is applied by the abutment wall (36) falls downward.
